# EUROPEAN PATENT APPLICATION

(11) **EP 1 729 375 A1**
(43) Date of publication of application: **06.12.2006**
(21) Application number: 05719321.1
(22) Date of filing: 21.02.2005
(51) Int. Cl.: H01R 13/629, G06K 17/00, H01R 12/18

(54) **SLIDER UNIT AND CARD CONNECTOR**

(30) Priority: 25.03.2004 JP 2004089345
(71) Applicant: Advanex Inc., Tokyo 114-8581 (JP)
(72) Inventor: KUNIHIRO, Shigeru; c/o ADVANEX INC.,, 1148581 (JP); TOKUI, Ryusuke; c/o ADVANEX INC.,, 1148581 (JP)
(74) Representative: Haug, Dietmar
(86) International application number: PCT/JP2005/002702
(87) International publication number: WO 2005/093910

(57) **Abstract**

A card connector (1) of the present invention includes; a housing (3) which forms a card storage space (5) into which a card (2) is inserted from an opening (6), and which is furnished with an input-output terminal that corresponds to an electrode section of the card (2); a slider (9) that is movable along an insertion and ejection direction of the card (2), and a position thereof is switchable between a first position, and a second position that is on a further side from the opening (6) than the first position, by a heart cam mechanism (10); a coil spring (13) that biases the slider (9) in an ejection direction of the card (2); and a contact section (23) that is integrally formed on the slider (9), and is contactable with an insertion direction end section of the card (2). The coil spring (13) is fitted to a shaft (12) installed movably relative to the slider (9).

## Description

### TECHNICAL FIELD

The present invention relates to a slider unit that accommodates cards such as memory cards, and performs the ejection thereof, and a card connector that is furnished with this slider unit.

### BACKGROUND ART OF THE INVENTION

In recent years, in various terminal devices such as mobile telephones and digital cameras, small memory cards are becoming widely utilized in order to record or transmit audio data, or image data taken by digital cameras. Connectors of the devices that are applicable to such cards are provided with an ejecting mechanism in order to allow the ejection of the inserted and connected card by an easy operation.

As the ejecting mechanism, a card-ejecting mechanism of so-called push-push method (in which the card is ejected by repressing the inserted card and operating the ejecting mechanism) that is achieved by the heart cam mechanism, is known (for example, refer to Patent Document 1 and Patent Document 2).
Normally, in such an ejecting mechanism, a slider that guides the card in the insertion and ejection direction is provided. This slider is biased in the direction in which the card is ejected by a coil spring. A coiled spring easily buckles if it is not maintained in a state in which it is guided in the length direction thereof (the axial direction). Accordingly, the coil spring is normally maintained in a state in which it is inserted into a cylinder section formed in the slider (for example, refer to FIG. 3 and FIG. 15 of the Patent Document 1).
[Patent Document 1] Japanese Patent (Granted) Publication No. 3431608
[Patent Document 2] Japanese Unexamined Patent Application, First Publication No. 2003-217738

Particularly in regard to devices such as mobile telephones, in which miniaturization is demanded, miniaturization of the card connectors that are installed in these is also demanded, and accordingly, miniaturization of the ejecting mechanism is also strongly demanded. However, as mentioned above, in the case of a configuration in which the ejecting mechanism maintains the coil spring within the cylinder section of the slider, the ejecting mechanism requires an extra space in the width direction and the thickness direction thereof by the amount of thickness of this cylinder section; and accordingly, the cylinder section for maintaining the coil spring is a factor in preventing the miniaturization of the card connector.
In a case in which a slider that has such cylinder section is formed by a mold, a slide core is necessary for the cylinder section, and accordingly, the mold becomes complex, making the initial costs higher. Furthermore, since multi-cavity molding is difficult because of the complexity of the mold, the running costs also increases.

Generally, in card connectors, in a case in which the card is ejected by an ejecting mechanism, since there is concern that if the card flies out from the connector with a strong momentum, it may fall and be damaged, it is desirable for a lock mechanism (so-called a half lock mechanism) to be provided that maintains the card in a state in which it is not completely ejected from the card insertion opening. However, even in such a half lock mechanism, there are cases in which, depending on the operation, the card flies out of the connector with a strong momentum; accordingly, there is a demand for mechanical improvements that can ease the strong flying out of the card from the connector, irrespective of the operation.

Generally, the heart cam mechanism is a configuration furnished with: an substantial heart-shaped cam groove formed in the slider; and a narrow rod-shaped cam follower of which one end portion thereof is movably engaged with this cam groove, while another end is held in the housing, and is a mechanism in which the slider is moved to a prescribed position by the relative movement of the one end portion of the cam follower within the cam groove. In such a heart cam mechanism, when the operator inserts and ejects the card, the movement of the card from a first prescribed position to a second prescribed position can be ascertained by the feel (clicking feel) thereof. This clicking feel is conventionally obtained by the one end portion of the cam follower getting over a level difference formed on the cam groove.
However, in such a configuration, since the level difference is worn out as the usage frequency increases, and the clicking feel can no longer be obtained; therefore, there is a need to grind the one end portion of the cam follower into substantial hemispherical shape in order to prevent the wearing out of the level difference. However, grinding of the one end portion of a narrow rod requires a microfabrication process, and is therefore very difficult, and there is a problem in that the costs become correspondingly higher.

### DISCLOSURE OF INVENTION

### Problems to be Solved by the Invention

The present invention has been carried out taking the aforementioned circumstances into consideration, with an object of miniaturizing the card connector, and furthermore, providing a slider unit and a card connector which enable cost reduction. Means for Solving the Problem

In order to achieve the aforementioned objects, a slider unit of the present invention is provided in a housing that forms a card storage space into which a card is inserted from an opening, and performs accommodation of the card into the card storage space and ejection of the card from the card storage space, the slider unit includes:
a slider that is positioned such that it is movable along an insertion and ejection direction of the card with respect to the housing, and is position switchable between a first position, and a second position that is on a further side from the opening than the first position, by a heart cam mechanism;
a coil spring that biases the slider in the ejection direction of the card;
a contact section that is integrally formed on the slider, and is contactable with an insertion direction end section of the card; and
a shaft that is installed to the slider so as to be relatively movable, and that maintains the coil spring by being inserted into the coil spring.

According to this slider unit, since the coil spring is held by inserting the shaft into the coil spring, the coil spring can be suitably held without buckling, and furthermore a conventional cylinder section can be unnecessary. Furthermore, since the shaft that is provided instead of the cylinder section is inserted into the coil spring, a space exclusively for this shaft is unnecessary. Accordingly, it is possible to eliminate the amount of space required for the conventional cylinder section, and thereby enabling miniaturization of the devices that use this slider unit.
Furthermore, as a result of eliminating a cylinder section, the mold that molds the slider can be comparatively simple. Accordingly, since it is easier to configure the mold for multi-cavity molding, it is possible to achieve cost reductions in both initial costs and running costs.

A card connector of the present invention includes;
a housing which forms a card storage space into which a card is inserted from an opening, and which is furnished with an input-output terminal that is to be connected to an electrode section provided on an insertion direction distal end side of the card;
a slider that is movable along the insertion direction and an ejection direction of the card, and is position switchable between a first position, and a second position that is on a further side from the opening than the first position, by a heart cam mechanism;
a coil spring that biases the slider in the ejection direction of the card;
a contact section that is integrally formed on the slider, and is contactable with an insertion direction end section of the card; and
a shaft that is provided on the slider to which the coil spring is fitted.

According to this card connector, in the same manner as the slider unit, since the coil spring is held by inserting a shaft into the coil spring, it is possible to eliminate the amount of space required for a conventional cylinder section, and thereby enabling, miniaturization of the card connector.
Furthermore, as a result of eliminating a cylinder section, the mold that molds the slider can be comparatively simple. Accordingly, since it is easy to configure the mold for multi-cavity molding, it is possible to achieve cost reductions in both initial costs and running costs.

In regard to the card connector, it is preferable for the shaft to be formed longer than the coil spring, such that both ends thereof both protrude from the coil spring.
In this manner, the coil spring is maintained in a state in which the orientation is stable, and buckling does not occur, and accordingly, the biasing force can be well exhibited.

In regard to the shaft, it is preferable that the housing is formed with holding sections which hold both ends of the shaft.
With this configuration, the assembly of the shaft portion can be made only by holding both ends of the shaft to which the coil spring has been fitted beforehand, with the holding section. Accordingly, the workability can be very good.

In regard to the card connector, in a case in which an engaging concave section is provided on the card, it is preferable that:
the slider is furnished with a locking member including: a first arm including an engaging section that protrudes into the card storage space and engages with the engaging concave section of the card when an insertion direction end section of the card is making contact with the contact section; a second arm that is provided on an opposite side of the card to the first arm; and a third arm provided on a same side as the second arm,
a force required to inwardly bend an interval between the first arm and the second arm is greater than a force required to inwardly bend an interval between the second arm and the third arm,
the second arm is configured such that when the slider is at the first position, if the engaging section is biased to an opposite side to the card storage space, the second arm moves to the third arm side and escapes to the opposite side to the card, such that the first arm is movable to the second arm side, and
a movement of the second arm to the opposite side to the card storage space is restricted by a regulation section which is a part of an inner surface of the housing, when the slider is at the second position.

In this manner, when the slider is at the first position, that is to say, for example, in a position in which the card is inserted into the opening, and the insertion direction end section thereof contacts with the contact section of the slider, the engaging section of the first arm engages with the notch of the card, and thereby making the card locked. If a force is applied so as to pull out the card in this state, this force acts through the engaging section such that the first arm is pushed to the opposite side to the card (i.e., the card storage space). Then, in this first position, the second arm is configured so as to move to the third arm side and escapes to the opposite side to the card. As a result of the first arm also moving to the opposite side to the card (i.e., the second arm side) together with the second arm, the lock by the engaging section (i.e., the locking member) is released. Since the third arm, which is adjacent to the second arm, restricts the movement of the second arm to the opposite side to the card, incorrect releasing of the card due to vibrations or the like is prevented.

Furthermore, when the slider is at the second position, that is to say, for example, in a position that is maintained in a state in which the card is inserted and the interval between the terminals is electrically connected, since the second arm is restrained by the regulation section so as not to move to the opposite side to the card storage space, if a strong force that bends the first arm to the second arm side does not act, locking of the card lock by the engaging section is not released; and accordingly, the locked state is maintained. However, by unexpected strong force acting on the first arm so that the first arm bends to the second arm side, the locking of the card lock by the engaging section (i.e., the locking member) is released, and the card can be ejected. That is, such a configuration is not so-called a full lock mechanism, but is a half lock mechanism.

In regard to the card connector, it is preferable that:
the heart cam mechanism is furnished with:
   a substantially heart-shaped cam groove formed on the slider; and
   a narrow rod-shaped cam follower, of which one end portion movably engages the cam groove, and an other end is held by the housing, and that:
      a first wall, which at the time the one end portion of the cam follower relatively moves within the cam groove and the slider arrives at the second position from the first position, contacts with a middle section of the cam follower and allows the cam follower to surmount the first wall, and a second wall, which, at the time the slider returns to the first position from the second position, makes contact with the middle section of the cam follower and allows the cam follower to surmount the second wall, is provided in the vicinity of the cam groove.
      In this manner, since the first wall and the second wall are respectively provided and the movement of the cam follower surmounting these is transmitted to the operator as a clicking feel, it is possible to perceive the arrival of the slider at the second position from the first position, or the return of the slider to the first position from the second position. Accordingly, the necessity to provide a level difference for producing a clicking feel as in the conventional manner is eliminated. Therefore, it is possible to simplify the grinding of the one end portion of the cam follower, and thereby enabling reduction in costs.

In regard to the card connector, it is preferable that:
the slider is furnished with a shaft holding section which is slidably holds the shaft,
a horizontally cross-sectional V-shaped plate spring which includes a mounting hole through which the shaft is inserted, is installed between the shaft holding section and the coil spring in a state in which the shaft is inserted into the mounting hole,
and the plate spring has larger elasticity than the coil spring, and for a restraining force (resistance) resulting from friction with respect to the shaft when it is open in a biasing direction to be greater than a restraining force (resistance) resulting from friction with respect to the shaft when it is closed in an opposite direction to the biasing direction.
In this manner, when the card is ejected by returning the slider to the first position from the second position as a result of the heart cam mechanism, the slider is returned to the first position as a result of biasing forces of the coil spring and the plate spring which are fitted to the shaft. At that point, firstly, the biasing force is demonstrated by the plate spring which has a stronger elasticity than the coil spring, and it becomes an open state from a closed state. When the plate spring opens, since the restraining force (resistance) resulting from friction with respect to the shaft of the plate-spring becomes larger, when the coil spring elongates from the contracted state and returns to the original state, as a result of the restraining force (resistance) of the opened plate spring with respect to the shaft firstly acting, the momentum is restricted when the slider returns from the second position to the first position. Accordingly, it is possible to prevent problems such as the card being dropped and damaged as a result of the card flying out of the card connector with a strong momentum.

### Effects of the Invention

Since the slider unit of the present invention holds the coil spring by inserting the shaft into the coil spring, and does not require a conventional cylinder section, it is possible to eliminate the amount of space needed for the conventional cylinder section, and therefore, the miniaturization of devices using this slider unit can be achieved.
Furthermore, as a result of not having a cylinder section, a mold for molding the slider unit can be comparatively simple, and accordingly, since it is easy to configure this mold for multi-cavity molding, cost reductions in both the initial costs and running costs can be achieved.
Since the card connector of the present invention is furnished with the aforementioned slider unit, the miniaturization of the card connector is possible as mentioned above, and further cost reductions can be achieved.

### BRIEF DESCRIPTION OF THE DRAWINGS

FIG. 1 is a plan view showing one embodiment of a card connector of the present invention.
FIG. 2A is a plan view showing the configuration of a slider.
FIG. 2B is a bottom view showing the configuration of the slider.
FIG. 2C is a side view showing the configuration of the slider.
FIG. 3 is a side view showing a cam follower.
FIG. 4 is a plan view showing the configuration of a cam groove.
FIG. 5 is a plan view showing the configuration of a locking member.
FIG. 6A is a plan view showing an action of the slider as a result of an insertion and extraction operation of a card.
FIG. 6B is a plan view showing the action of the slider as a result of the insertion and extraction operation of the card.
FIG. 6C is a plan view showing the action of the slider as a result of the insertion and extraction operation of the card.
FIG. 7 is a plan view showing another embodiment of a card connector of the present invention.
FIG. 8 is a main part cross-sectional view showing a state in which a C-ring has engaged with an enlarged diameter section in the embodiment of the card connector of the present invention.
FIG. 9A is a main part enlarged view showing the enlarged diameter section formed on the end of a shaft.
FIG. 9B is a main part enlarged plan view showing a state in which the shaft is installed in the housing.

### Brief Description of the Reference Symbols

1 Card connector, 2 Card, 2a Engaging concave section, 3 Housing, 3b Holding section, 4 Slider unit, 5 Card storage space, 6 Opening, 9 Slider, 10 Heart cam mechanism, 11 Cam follower, 12 Shaft, 13 Coiled spring, 14 Locking member, 14b First arm, 14c Second arm, 14d Third arm, 14f Engaging section, 14g Engaging section, 15 Cam groove, 18a First wall, 18b Second wall, 21 Concave section, 22 Inner surface (regulation section), 23 Contact section, 25 Plate spring

### BEST MODE FOR CARRYING OUT THE INVENTION

Hereunder, the present invention is explained in detail.

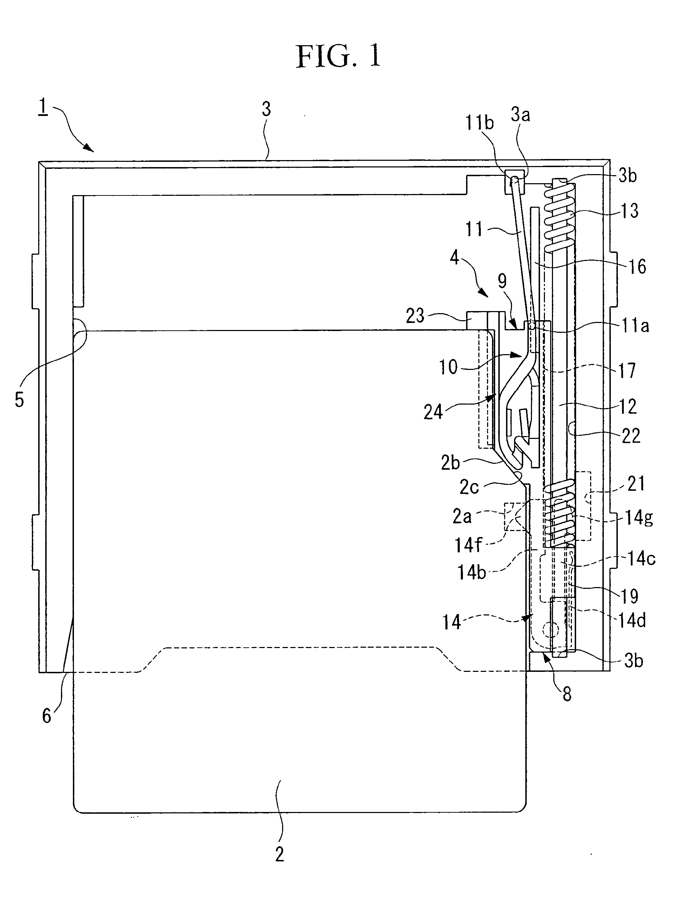

FIG. 1 is a plan view showing an embodiment of a card connector of the present invention, in which reference symbol 1 denotes a card connector, and reference symbol 2 denotes a card that is inserted and extracted from this card connector 1. In FIG. 1, in order to explain the interior of the card connector, it is shown in a state viewing through the cover of a housing 3 (not shown in the drawings).

The card connector 1, which is installed in a mobile telephone in the present embodiment, having the housing 3 that stores the card 2, and a slider unit 4 that is built into the interior of the housing 3. The card 2 is a rectangular plate shaped recording medium such as a memory card, for recording audio data, image data, and the like. In regard to the card 2, on the insertion direction end side thereof, that is to say, on the side in which it is stored within the housing 3, there are a plurality of electrode sections (not shown in the drawings) formed, which are terminals. On the other hand, there are input-output terminals (not shown in the drawings) also provided on the housing 3, that are formed by bending thin and long belt-like conducting plate springs, at a position corresponding to the electrode sections of the card 2, that is to say, at a position that respectively contact with, and electrically connect to, the aforementioned electrode sections when the card is inserted to the second position mentioned below.

The card 2 may be a normal type which has the electrode sections disposed on the lower side (the base plate side facing the cover of the housing) and is inserted into the housing 3, or conversely a reverse type which has the electrode sections disposed on the upper side (the cover side of the housing) and is inserted into the housing 3. Of course, in regard to the input-output terminals on the housing 3 side, depending on the type of card 2 to be used, the locations of the input-output terminals thereof are determined beforehand.
On one face of the card 2 (the face on the lower side in the present embodiment), on the side portion along the insertion and ejection direction with respect to the housing 3, an engaging concave section 2a that disengagably engages the engaging section of the locking member mentioned below, is formed. Furthermore, further on the end side (on the insertion direction end side) than the engaging concave section 2a of the card 2, a notch section 2b is formed. The notch section 2b is formed by cutting out a portion of the corner of the card 2, and is furnished with an oblique side 2c in the vicinity of the engaging concave section 2a, which is inclined with respect to the side of the card 2.

The housing 3 is furnished with a synthetic resin-made housing body which includes a rectangular base plate and side plates that stand from three sides of the base plate, and a metallic cover (not shown in the drawings) which covers the upper section of the housing body. In FIG. 1, only the housing body is shown as the housing 3. The housing 3 forms a card storage space 5 as its internal space thereof, and includes an opening 6 which leads to the card storage space 5 on the side in which a side plate has not been provided. Here, in the width direction of the housing 3 (the direction orthogonal to the insertion and ejection direction of the card 2), the opening 6 is formed biased on one side; and on the other side of the housing 3, a slider unit accommodation section 8 that accommodates the slider unit 4, is formed.

The slider unit 4 accommodated in the slider unit accommodation section 8 configures a card ejecting mechanism. The slider unit 4 is furnished with: a resin-made slider 9 that is movably provided along the insertion and ejection direction of the card 2; a cam follower 11 that configures a heart cam mechanism 10; a shaft 12 that is provided on the slider 9; a coil spring 13 that is fitted onto the shaft 12; and a locking member 14 that is provided on the slider 9.

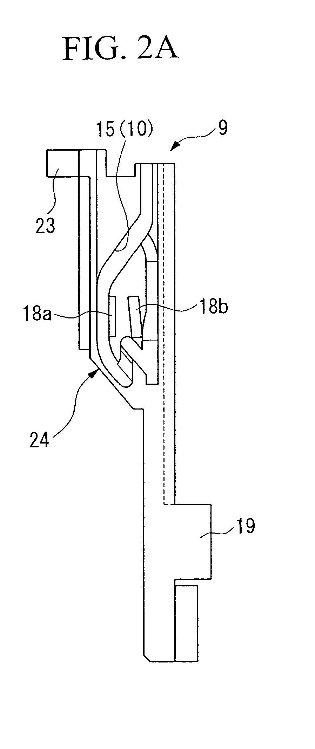

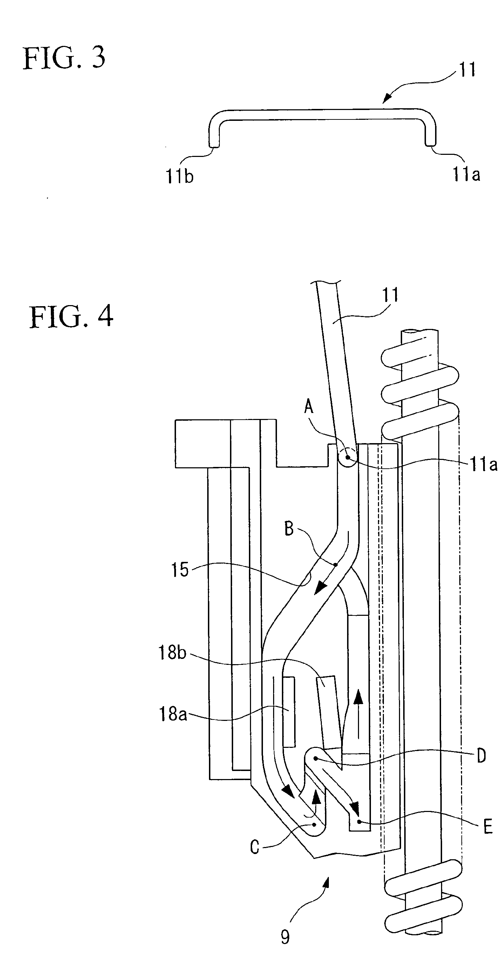

As shown in FIG. 2A, a cam groove 15 that configures the heart cam mechanism 10 is formed on the upper surface side of the slider 9. This cam groove 15 has a substantial heart shape in plan view which is conventionally known. And as a result of the one end portion of the cam follower 11 relatively traveling in this cam groove 15, the positioning of the slider 9 with respect to the housing 3, that is to say, the positioning of the card 2 within the card storage space 5, is performed. The cam follower 11 is, as shown in FIG. 3, formed by a metal thin rod in which both end portions thereof are substantially bent at right angles; and as mentioned above, one end portion 11a thereof is made to be a free edge that may travel within the cam groove 15; and another end portion 11b is rotatably installed in an installation hole 3a (refer to FIG. 1) formed in the housing 3, and is maintained. The central portion of this cam follower 11 is continuously biased towards the housing body by the cover of the aforementioned housing 3 (not shown in the drawings). Accordingly, because both end portions of the cam follower 11, that is to say, the one end portion 11a and the other end portion 11b, are biased towards the housing 3 side, they travel within the cam groove 15 without coming out from the inside of the cam groove 15.

Within the cam groove 15, as shown in FIG. 4, a level difference, a slope, or the like, are provided at each predetermined positions so that the one end portion 11a of the cam follower 11 advances in the arrow direction in one way. That is to say, as mentioned below, in the initial state, wherein the card 2 is not pushed in, and accordingly, the slider 9 has not been moved to the far side of the card storage space 5 by the card 2, the one end portion 11a of the cam follower 11 is, as shown in FIG. 4, positioned at the point A of the cam groove 15. The position of the slider 9 in the initial state is referred to as the "first position" in the present invention.

Then, as mentioned below, when the slider 9 is moved forward by inserting the card 2, the cam groove 15 make the one end portion 11a of the cam follower 11 run along the arrow through the points B and C, and furthermore, leads it to the point D. At the point B, although the groove is branched in two directions, as a result of a level difference being formed on one side thereof, it is made to travel along the arrow towards the point C.
When the one end portion 11a of the cam follower 11 arrives at the point D via the point C, as mentioned below, the movement of the slider 9 is stopped as a result of the pressing force towards the card 2 being released, and it is maintained in this state. The position of the slider 9 when the one end portion 11a of the cam follower 11 is stopped at this point D is referred to as the "second position" in the present invention.
Then, when the slider 9 is moved forward again from this state, the one end portion 11a of the cam follower 11 travels within the cam groove 15 along the arrow to the point B via the point E, and furthermore, returns to the point A. At the point D of the cam groove 15, as a result of a level difference formed in the direction returning to the point C, the cam follower 11 always travels towards the point E.

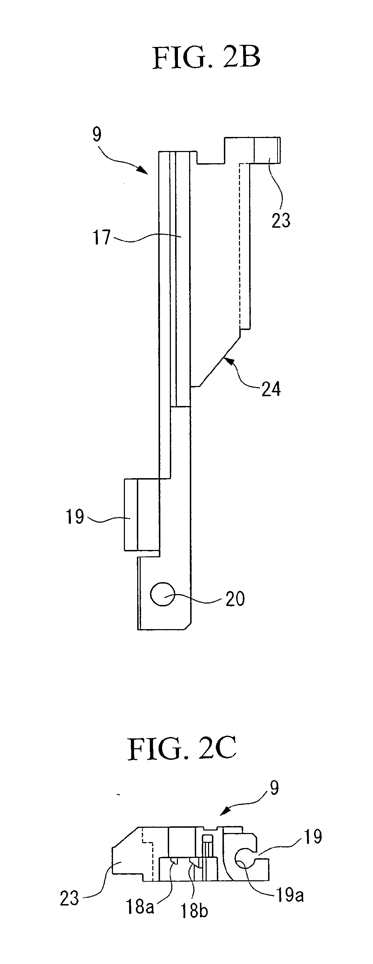

The movement (advance or retreat) of the slider 9, which accompanies the insertion and extraction of the card 2 is, as shown in FIG. 1, guided in a straight line without deviation in the lateral direction as a result of a guide 17 formed on the bottom portion of the slider 9 engaging a rail 16 formed on the base plate of the housing 3, as shown in FIG. 2B.

As shown in FIG. 4, in the vicinity of the cam groove 15 of the slider 9, a first wall 18a that protrudes towards the cover side of the housing 3 between the point B and the point C, and a second wall 18b that protrudes towards the cover side of the housing 3 in the vicinity of the point D, are formed. When the slider 9 arrives at the second position from the first position, that is, as mentioned above, when the one end portion 11a of the cam follower 11 relatively moves within the cam groove 15 and arrives at the point C from the point B, the central portion of the cam follower 11 surmounts the first wall 18a. When the slider 9 returns to the first position from the second position, that is, when the one end portion 11a moves and arrives at the point E from the point D, the central portion of the cam follower 11 surmounts the second wall 18b. As a result of the cam follower 11 surmounting the first wall 18a and the second wall 18b in this manner, a person operating the insertion and extraction of the card 2 can obtain a clicking feel. In regard to the first wall 18a and the second wall 18b, as shown in FIG. 2C, the upper surface sides thereof are an inclined surfaces. Accordingly, the cam follower 11 can smoothly surmount the first wall 18a and the second wall 18b without being caught.

In regard to the slider 9, as shown in FIG. 1, a shaft holding section 19 is formed on the opening 6 side of the housing 3, and on the opposite side to the card storage space 5. In regard to the shaft holding section 19, as shown in FIG. 2C, the cross-section possessing the groove 19a is a substantial C-shape. Within the groove 19a, as shown in FIG. 1, the shaft 12 is slidably inserted.
The shaft 12 is a metal thin rod and inserted into the coil spring 13 as mentioned above. The shaft 12 is formed longer than the free length of the coil spring 13, that is to say, longer than the coil spring 13 in a state in which it is not compressed and is load-free, and maintains the coil spring 13 in a state in which both ends of the shaft 12 protrude from the coil spring 13. As a result of both ends of the shaft 12 that protrude from the coil spring 13 being respectively maintained by holding sections 3b that are formed on the side walls of the housing 3, the shaft 12 is fixed to the housing 3. Accordingly, the shaft 12, as mentioned below, possesses a function as a guide when the slider 9 moves (advances or retreats). The coil spring 13 that is fitted to the shaft 12 is stretchably maintained on the shaft 12, and maintains an orientation along the shaft 12 without becoming buckled.

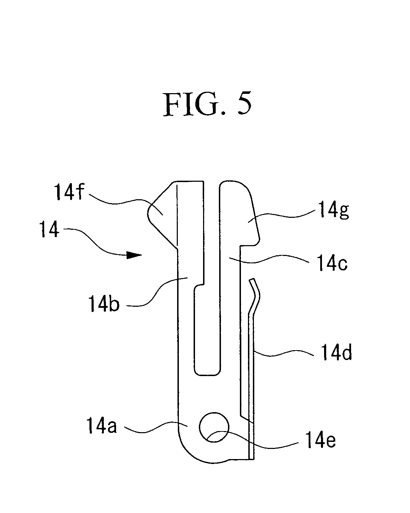

A locking member 14 is installed on the bottom surface side of the rear end side of the slider 9. The locking member 14 is metallic, and, as shown in FIG. 5, is furnished with a base portion 14a, and three arms (a first arm 14b, a second arm 14c, and a third arm 14d) that extend from this base portion 14a. As a result of a hole 14e formed on the base portion 14a engaging a protrusion 20 (refer to FIG. 2B) formed on the bottom surface of the slider 9, the locking member 14 is rotatably installed with respect to the slider 9 centered about this protrusion 20.

The first arm 14b in regard to the locking member 14 is, as shown in FIG. 1, positioned on the card storage space 5 side of the hole 14e; and on the end portion of the first arm 14b, as shown in FIG. 5, an engaging section 14f is formed that protrudes on the card storage space 5 side. The engaging section 14f is configured such that it disengagably engages the engaging concave section 2a formed on the card 2. The engaging section 14f is formed in a substantial triangular shape. When the engaging section 14f is pressed by the card 2, this pressing force is converted into a force towards (escaping to) the lateral direction and the first arm 14b is biased to the opposite side to the card storage space 5 (the card 2).

The second arm 14c is provided on the opposite side to the card storage space 5 with respect to the hole 14e; and an engaging section 14g that protrudes on the opposite side to the card storage space 5 is formed on the end portion thereof. In regard to the engaging section 14g, as mentioned below, when the slider 9 is at the first position, if the second arm 14c is biased to the opposite side to the card storage space 5, it enters into a concave section 21 formed on the side wall of the housing 3. Accordingly, the second arm 14c can escape into the opposite side to the card storage space 5. When the slider 9 is at the second position, if the second arm 14c is biased to the opposite side to the card storage space 5, the engaging section 14g contacts with an inner surface (regulation section) 22 of the side wall in which the concave section 21 is formed. Accordingly, the second arm 14c is restrained by the inner surface (regulation section) 22, such that it is not able to move (not able to bend) further.

The third arm 14d is provided on the opposite side to the card storage space 5 with respect to the hole 14e (on the same side as the second arm 14c), is formed shorter compared to the first arm 14b and the second arm 14c, and the outside thereof is in contact with the inner surface (regulation section) 22 of the side wall.
The first arm 14b, the second arm 14c, and the third arm 14d are formed such that the force required for the interval between the first arm 14b and the second arm 14c to bend to the inside (the hole 14e side) is larger than the force required for the interval between the second arm 14c and the third arm 14d to bend to the inside. That is to say, with respect to a force towards the left in FIG. 5, it is more difficult for the second arm 14c to be bent than the third arm 14d. Under such a configuration, in regard to the locking member 14, in a case in which the third arm 14d is restrained by the regulation section 22, when a force in the lateral direction (the inner surface 22 direction, that is to say, the right-hand direction in FIG. 5) is applied through the engaging section 14f of the first arm 14b as mentioned below, the locking member 14 is firstly bent such that the interval between the second arm 14c and the third arm 14d is narrower as a result of this force; and thereafter, the locking member 14 is bent such that the interval between the first arm 14b and the second arm 14c is narrower. In regard to the locking member 14, since the base portion 14a thereof is rotatably installed on the protrusion 20 of the slider 9, when a force in the lateral direction (the inner surface 22 direction) is applied, it is rotated in its entirety within a movable range.

A contact section 23 that makes contact with the insertion direction end portion of the card 2 is integrally formed on the end side of the slider 9. The cam groove forming section 24 of the slider 9in which the cam groove 15 is formed engages the notch section 2b of the card 2.

Next, a method of inserting and extracting the card 2 with respect to the card connector 1 of such a configuration is explained.
In order to insert the card 2 into the card connector 1, the card 2 is firstly placed into the card storage space 5 from the opening 6, and is pushed. Then, as shown in FIG. 1, the insertion direction end portion of the card 2 contacts with the contact section 23 of the slider 9 which is at the first position, and the notch section 2b engages the cam groove forming portion 24 of the slider 9. At this time, the oblique side 2c of the notch section 2b of the card 2 contacts with the engaging section 14f of the first arm 14b of the locking member 14, and is pressed towards the forward direction. As a result of this pressing force being converted into the lateral direction (the inner surface 22 direction), the locking member 14 is pushed to the inner surface 22 side. Then, as mentioned above, since the interval between the second arm 14c and the third arm 14d is more easily bent, the first arm 14b moves to the inner surface 22 side as a result of this section bending, and the engaging section 14f withdraws from the card storage space 5 to the inner surface 22 side. In this state, if the card 2 is further pushed forward, the engaging section 14f is maintained in a state in which it is pressed by the side of the card 2, and is withdrawn. As mentioned above, when the insertion direction end portion contacts with the contact section 23, as a result of the engaging concave section 2a of the card 2 arriving at a position corresponding to the engaging section 14f, the pressing towards the locking member 14 is released, the engaging section 14f is returned to its original position, and the engaging section 14f engages the engaging concave section 2a. Accordingly, the card 2 becomes a state in which it is locked (half-locked) inside the card connector 1 (inside the slider 9).

Next, from this state, that is to say, a state in which the slider 9 is at the first position, in order to make the electrode section (terminal) of the card 2 conduct by connecting it to the input-output terminal of the housing 3 side, the card 2 is further pressed and is pushed to the far side of the card storage space 5 along with the slider 9. At this time, since the guide 17 along the rail 16and the shaft 12 maintained by the housing 3 act as guides, the slider 9 moves forward in a straight line without deviating in the lateral direction. Also when the slider 9 moves backward, the slider 9 moves in a straight line without deviation, in the same manner as when it moves forward.

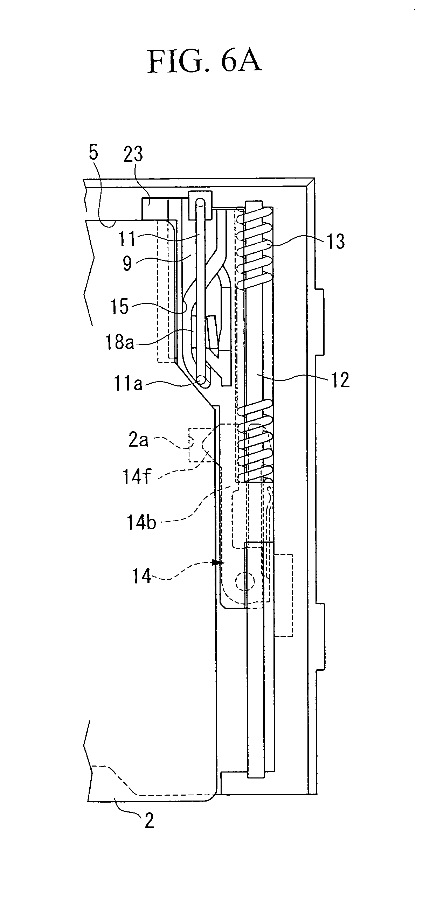

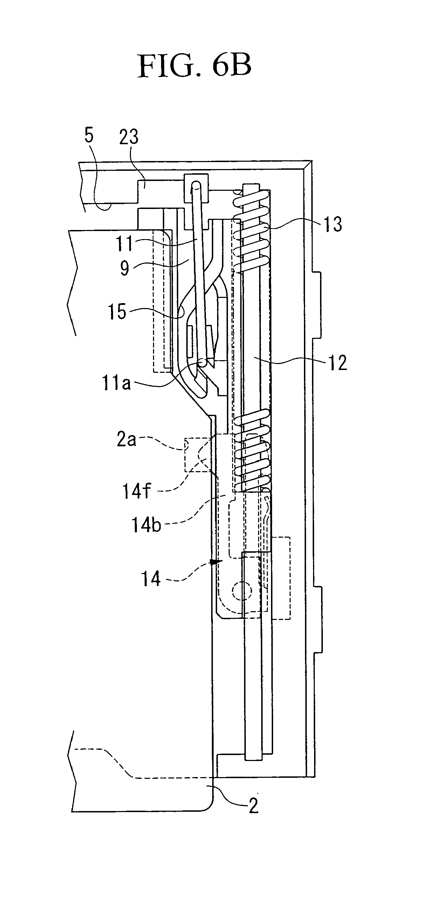

In this manner, when the card 2 is pushed together with the slider 9, the slider 9 (the card 2) is guided to the second position by the heart cam mechanism 10. That is to say, accompanying the movement of the slider 9, as a result of the one end portion 11a of the cam follower 11 relatively moving within the cam groove 15 of the slider 9, the slider 9 is guided to the second position. At this time, the one end portion 11a of the cam follower 11 moves, as shown in FIG. 4, from the point A of the cam groove 15 along the arrow through the points B and C, to the point D. When the slider 9 is moved forward by pushing in the card 2, the coil spring 13 fitted to the shaft 12 is pressed by the shaft holding section 19 and is contracted, generating a biasing force that biases the slider 9 in the direction in which it is to be moved backward. When the one end portion 11a of the cam follower 11 arrives at the point C from the point A via the point B, as shown in FIG. 6A, because the one end portion 11a is unable to advance any further, the operator perceives this through the fingertip. When the operator stops pressing of the card 2, the slider 9 is moved backward by the biasing force of the coil spring 13; and therefore, the one end portion 11a of the cam follower 11 moves, as shown in FIG. 6B, from the point C to the point D. At this point D, the one end portion 11a of the cam follower 11 is unable to advance any further in the biasing direction of the coil spring 13, and it stops here. Accordingly, the card 2 also moves backward together with the slider 9, the slider 9 is maintained at the second position, and the electrode section (terminal) of the card 2 is made conductive by connecting it to the input-output terminal of the housing 3 side.

When the card 2 is pushed in this manner, and the one end portion 11a of the cam follower 11 is relatively moved within the cam groove 15 of the slider 9, when the one end portion 11a arrives at the point C from the point B as shown in FIG. 6A, that is to say, when the slider 9 arrives at the second position side from the first position, the central portion of the cam follower 11 contacts with the first wall 18a, and surmounts the first wall 18a as mentioned above. At this time, as a result of the operator of the card 2 perceiving the cam follower 11 surmounting the first wall 18a as a clicking feel, it is recognized that the slider 9 has moved to the second position, and it is possible for the electrode section (the terminal) of the card 2 to be made conductive by connecting it to the input-output terminal of the housing 3 side.

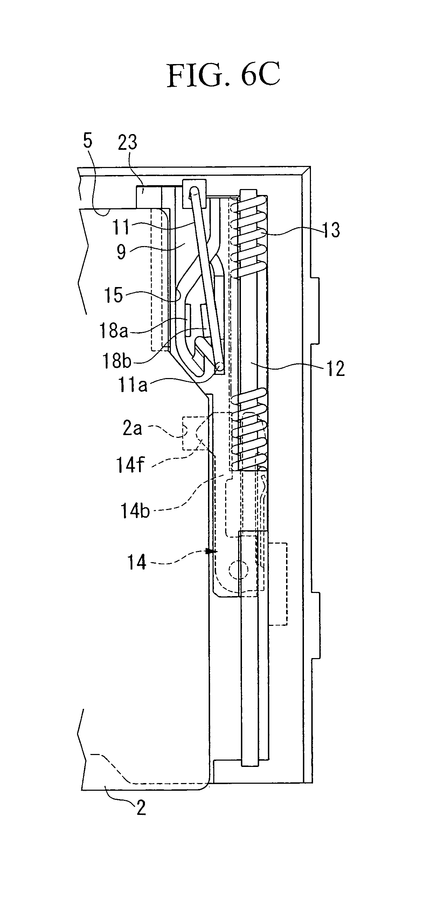

In order to pull out the card 2 from the card connector 1, by pressing the card 2 again, the one end portion 11a of the cam follower 11 relatively moves within the cam groove 15 as a result of the slider 9 moving; and, as shown in FIG. 6C, it moves from the point D to the point E. When the one end portion 11a arrives at the point E, it is unable to advance any further, and therefore, the operator perceives through the fingertip that the card 2 cannot be pushed any further. Consequently, when the operator stops the pressing of the card 2, the slider 9 moves backward as a result of the biasing force of the coil spring 13, and the one end portion 11a of the cam follower 11 returns from the point E to the point A which is the initial position, via the point B, and stops. Accordingly, the slider 9 is returned to the first position together with the card 2, and it becomes the state shown in FIG. 1.

When the card 2 is pushed in this manner, and the one end portion 11a of the cam follower 11 is relatively moved within the cam groove 15 of the slider 9, on the way the one end portion 11a arrives from the point D at the point E, that is to say, on the way the slider 9 arrives from the second position to the first position, the central portion of the cam follower contacts with the second wall 18b, and surmounts the second wall 18b as mentioned above. At this time, the operator of the card 2 can perceive the cam follower 11 surmounting the second wall 18b as a clicking feel.

In this manner, even if the slider 9 returns to the first position together with the card 2, in regard to the locking member 14, the engaging section 14f is in a state in which it engages the engaging concave section 2a of the card 2 as a result of the third arm 14d that contacts with the inner surface (regulation section) 22. That is, since the card 2 is in a state in which it is locked (half locked) within the card connector 1, it does not spontaneously come off from the slider 9 (card connector 1). The operator can disconnect the card 2 from the card connector 1 by pulling out the card 2. In this manner, when the card 2 is pulled out from the slider 9 that is at the first position, as a result of the engaging concave section 2a of the card 2 being detached, and the engaging section 14f of the first arm 14b of the locking member 14 being pressed, the entire of the locking member 14 attempts to rotate in the inner surface 22 direction. Then, as a result of the second arm 14c moving to the third arm 14d side, and the engaging section 14g entering into the concave section 21 of the inner surface 22, the second arm 14c escapes to the inner surface 22 side. Accordingly, the first arm 14b also moves (rotates) to the second arm 14c side, and the lock of the card 2 resulting from the engaging section 14f is released. Therefore, the card 2 is released from the card connector 1.

In a state in which the slider 9 is at the second position together with the card 2, even in a case in which a small force that moves the card 2 backward is unexpectedly applied as a result of dropping the card connector 1 in its entirety, and the like, falling of the card 2 is prevented as a result of the locking force of the locking member 14. That is to say, in the state shown in FIG. 6B, even if a force that moves the card 2 backward is applied, and a pressing force acts on the locking member 14 in the lateral direction (the inner surface 22 direction), since the movement of the engaging section 14g of the second arm 14c or the third arm 14d is restrained by the inner surface (regulation section) 22 in this state, the lock of the card 2 resulting from the engaging section 14f of the first arm 14b is not released, and accordingly, a state in which the card is locked is maintained.

Even in a state in which the slider 9 is at the second position together with the card 2, in a case in which a large pull-out force is applied to the card 2, as a result of the first arm 14b being moved to the second arm 14c side, the engaging section 14f detaches from the engaging concave section 2a. Accordingly, in regard to the card 2, the lock is released, and it is withdrawn from the card connector 1.

Therefore, a card connector 1 of such a configuration is furnished with so-called a double half lock mechanism that requires a comparatively small force at the first position, and requires a comparatively large force at the second position, when the card 2 is detached. Accordingly, when the card 2 is ejected as a result of the ejecting mechanism (heart cam mechanism), as well as being able to prevent the card 2 flying out with a strong momentum, the card 2 can be pulled out with a small force. Furthermore, for example, in a case in which a card 2 at the second position is attempted to be pulled out by force as a result of misoperation or the like, it is possible to pull out the card 2 without damaging the card connector 1.

Furthermore, when the slider 9 arrives at the second position from the first position, if it returns to the first position from the second position, since it was made such that a clicking feel was transmitted to the operator as a result of the cam follower 11 respectively surmounting the first wall 18a and the second wall 18, there is no necessity to provide a level difference in order to exhibit a clicking feel to the cam groove in a conventional manner. Accordingly, simplification of the grinding of the one end portion 11a of the cam follower 11, and the reduction in costs, can be achieved.

Furthermore, since the slider unit 4 used in this card connector 1 is made to maintain the coil spring 13 by inserting the shaft 12 into the coil spring 13, a conventional cylinder section for holding the coil spring 13 is unnecessary. Moreover, since the shaft 12 that is provided instead of the cylinder section is inserted into the coil spring 13, a dedicated space for this shaft 12 is not required, and accordingly, the amount of space needed for the conventional cylinder section can be eliminated. Therefore, it is possible to miniaturize the card connector 1 that uses this slider unit 4.
Furthermore, as a result of not having a cylinder section, the mold that molds the card connector 1 can be comparatively simple. Accordingly, since it is easier to configure this mold for multi-cavity molding, it is possible to achieve cost reductions of the slider unit 4 in regard to both initial costs and running costs.

The slider unit 4 mentioned above can be used as a guiding member for various tabular recording mediums such as cards in devices other than the card connector 1 mentioned above.
Furthermore, the present invention should not be restricted by the embodiments mentioned above, and design changes are possible within a range that does not depart from the scope of the present invention.

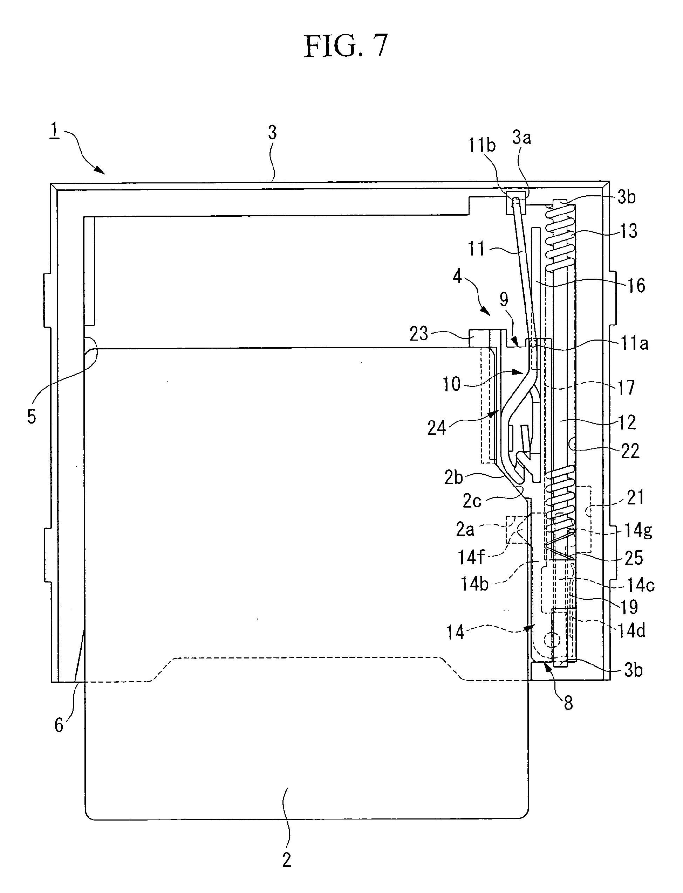

For example, as shown in FIG. 7, a cross-sectional V-shaped plate spring 25 that has a stronger elasticity than the coil spring 13 may be installed on the shaft 12 in addition to the coil spring 13. This plate spring 25 is achieved by bending a metal plate in V-shape, and is a compressed spring formed such that it opens in the original state and demonstrates a biasing force if the bent pieces are bent in a direction in which they mutually is nearer, and installation holes (not shown in the drawings) for inserting the shaft 12 into are formed on each bent piece. The plate spring 25 is positioned between the coil spring 13 and the shaft holding section 19, and is installed to the shaft 12 by inserting the shaft 12 into the installation holes at this position.

In regard to the plate spring 25, when the bent pieces are bent in a direction in which they mutually is nearer, and it is closed (is compressed) in the opposite direction to the biasing direction, the inner perimeters of the installation holes do not strongly contact the shaft 12, and accordingly, it is made such that the restraining force (resistance) resulting from the friction with respect to the shaft 12 is small. On the other hand, when the bent pieces are mutually distant, and are opened (is not compressed) in the biasing direction, the inner perimeters of the installation holes strongly contact the shaft 12, so that the restraining force resulting from the friction (resistance) with respect to the shaft 12 is large.

In regard to a card connector 1 having such a configuration, when the card 2 (the slider 9) is returned to the first position from the second position as a result of the heart cam mechanism 10, if it is attempted to eject the card 2, the slider 9 is returned to the first position together with the card 2 as a result of the biasing force of the coil spring 13 and the plate spring 25 fitted to the shaft 12. At that point, the plate spring 25 which has a stronger elasticity than the coil spring 13 firstly demonstrates the biasing force thereof, and becomes an open state from the closed state. Then, since the restraining force (resistance) of the plate spring 25 resulting from the friction with respect to the shaft 12 becomes large, when the coil spring 13 extends from a contracted state and returns to the original state, as a result of the restraining force (resistance) of the plate spring 25 acting with respect to the shaft 12, the momentum of the slider 9, as well as the card 2, is restricted when it returns to the first position from the second position.
Accordingly, it is possible to prevent problems such as the card 2 being dropped and damaged as a result of the card flying out of the card connector 1 with a strong momentum.

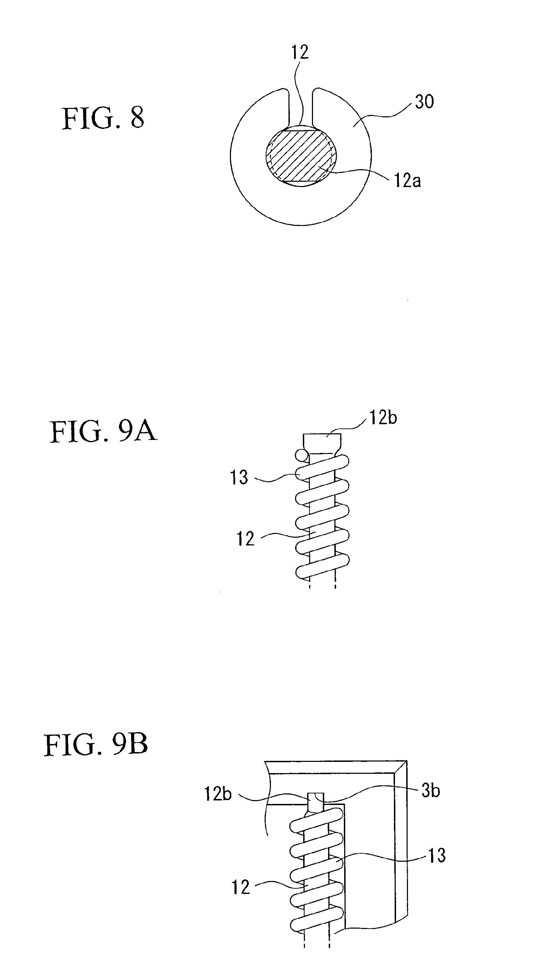

Furthermore, instead of installing such a plate spring 25, for example, at the installation position of the plate spring 25, a C-ring 30 may be provided, and furthermore, an enlarged diameter section 12a in which a portion of the shaft 12 is flattened in the radial direction and the outside diameter is sectionally expanded compared to the other portions, may be formed as shown in FIG. 8. As a result of such a configuration, in the same manner as the case in which the plate spring 25 is installed, the slider 9, together with the card 2, is returned to the first position from the second position as a result of the heart cam mechanism 10, and if the card 2 is attempted to be ejected, the slider 9 (the card 2) is returned to the first position as a result of the coil spring 13 fitted to the shaft 12. At that point, as a result of the C-ring 30 fitted to the shaft 12 engaging the enlarged diameter section 12a of the shaft 12, the restraining force (resistance) resulting from the friction with respect to the shaft 12 becomes large. Accordingly, when the coil spring 13 extends from the contracted state and returns to the original state, as a result of the restraining force (resistance) with respect to the shaft 12 by the C-ring 30, the momentum of the slider 9, as well as the card 2, when it returns to the first position from the second position, is restricted.
Accordingly, as a result of such a configuration, it is possible to prevent problems such as the card 2 being dropped and damaged as a result of the card flying out of the card connector 1 with a strong momentum.

Furthermore, instead of using such a C-ring 30, in regard to the end portions of the coil spring 13, that is to say, the portion on the plate spring 25 side in FIG. 7, for example, two coils or so may be made to be a smaller inner diameter. Even in such a manner, as a result of the portion in which the inner diameter has been made smaller engaging the enlarged diameter section 12a mentioned above, a restraining force (resistance) resulting from friction is generated with respect to the shaft 12. Therefore, when the coil spring 13 extends from the contracted state and returns to the original state, it is possible to make the restraining force (resistance) with respect to the shaft 12 by the portion in which the inner diameter has been made smaller.

Furthermore, as shown in FIG. 9A, by flattening both end portions of the shaft 12 in the same manner as the enlarged diameter section 12a, enlarged diameter sections 12b may be made in which the outermost diameter is sectionally expanded compared to the other portions. As a result of providing the enlarged diameter sections 12b, the coil spring 13 does not directly contact with the holding section 3b formed on the side wall of the housing 3, as shown in FIG. 9B. Accordingly, the biasing force of the coil spring 13 continuously acts on the housing 3, and it is possible to prevent the occurrence of minor deformations in the housing 3. Furthermore, as a result of the enlarged diameter sections 12b formed on both end portions of the shaft 12, the coil spring 13 that is once held by being inserted between the enlarged diameter sections 12b is no longer able to come off from the shaft 12, and therefore, assembling ability improves, and an improvement in productivity can be achieved. At the time of installation in the housing 3, as shown in FIG. 9B, it is preferable, from the point of satisfactorily fixing the shaft 12, for the side in which the outside diameter has become thinner as a result of flattening, to be maintained by insertion into the holding section 3b.

### INDUSTRIAL APPLICABILITY

According to the slider unit of the present invention, since the coil spring is maintained by inserting a shaft into the coil spring, the coil spring can be held by preventing buckling thereof, and furthermore enabling the conventional cylinder section unnecessary. Moreover, since the shaft that has been provided instead of the cylinder section is inserted into the coil spring, a dedicated space for shaft is unnecessary. Accordingly, it is possible to eliminate the amount of space needed for the conventional cylinder section. Therefore, miniaturization of devices that use this slider unit is possible.
Furthermore, as a result of eliminating the cylinder section, the mold that forms the slider unit is comparatively simple. Accordingly, since it is easy to configure this mold for multi-cavity molding, it is possible to achieve cost reductions in both the initial costs, and running costs.

## Claims

1. A slider unit which is provided in a housing (3) that forms a card storage space (5) into which a card (2) is inserted from an opening (6), and performs accommodation of the card (2) into the card storage space (5) and ejection of the card (2) from the card storage space (5), the slider unit comprising:
a slider (9) that is positioned such that it is movable along an insertion and ejection direction of the card (2) with respect to the housing (3), and is position switchable between a first position, and a second position that is on a further side from the opening (6) than the first position, by a heart cam mechanism (10);
a coil spring (13) that biases the slider (9) in the ejection direction of the card (2);
a contact section (23) that is integrally formed on the slider (9), and is contactable with an insertion direction end section of the card (2); and
a shaft (12) that is installed to the slider (9) so as to be relatively movable, and that maintains the coil spring (13) by being inserted into the coil spring (13).

2. The slider unit according to claim 1, wherein the shaft (12) is formed longer than a free length of the coil spring (13), and both ends thereof both protrude from the coil spring (13).

3. A card connector comprising;
a housing which forms a card storage space (5) into which a card (2) is inserted from an opening (6), and which is furnished with an input-output terminal that is to be connected to an electrode section provided on an insertion direction distal end side of the card (2);
a slider (9) that is movable along the insertion direction and an ejection direction of the card (2), and is position switchable between a first position, and a second position that is on a further side from the opening (6) than the first position, by a heart cam mechanism (10);
a coil spring (13) that biases the slider (9) in the ejection direction of the card (2);
a contact section (23) that is integrally formed on the slider (9), and is contactable with an insertion direction end section of the card (2); and
a shaft (12) that is provided on the slider (9) to which the coil spring (13) is fitted.

4. The card connector according to claim 3, wherein the shaft (12) is formed longer than a free length of the coil spring (13), and both ends thereof both protrude from the coil spring (13).

5. The card connector according to claim 4, wherein the housing (3) is formed with holding sections (3b) which hold both ends of the shaft (12).

6. A card connector according to claim 3, used for the card (2) provided with an engaging concave section (2a), wherein
the slider (9) is furnished with a locking member (14) comprising:
a first arm (14b) including an engaging section (14f) that protrudes into the card storage space (5) and engages with the engaging concave section (2a) of the card (2) when an insertion direction end section of the card (2) is making contact with the contact section (23);
a second arm (14c) that is provided on an opposite side of the card (2) to the first arm (14b); and
a third arm (14d) provided on a same side as the second arm (14c), wherein
a force required to inwardly bend an interval between the first arm (14b) and the second arm (14c) is greater than a force required to inwardly bend an interval between the second arm (14c) and the third arm (14d), wherein
the second arm (14c) is configured such that when the slider (9) is at the first position, when the engaging section (14f) is biased to an opposite side to the card storage space (5), the second arm (14c) moves to the third arm (14d) side and escapes to the opposite side to the card (2), such that the first arm (14b) is movable to the second arm (14c) side is possible, and wherein
a movement of the second arm (14c) to the opposite side to the card storage space (5) is restricted as a result of a regulation section (22) which is a part of an inner surface of the housing (3), when the slider (9) is at the second position.

7. The card connector according to claim 6, wherein
the locking member (14) is positioned between the card storage space (5) and the regulation section (22), such that the third arm (14d) contacts with the regulation section (22), and wherein
on a part of the regulation section (22) of the housing (3), there is provided with a concave section (21) which allows entry of at least a part of the second arm (14c) when the slider (9) is at the first position.

8. The card connector according to claim 3, wherein the heart cam mechanism (10) is furnished with:
a substantially heart-shaped cam groove (15) formed on the slider (9); and
a narrow rod-shaped cam follower (11), of which one end portion (11a) movably engages the cam groove (15), and an other end (11b) is held by the housing (3), and wherein
a first wall (18a), which at the time the one end portion (11a) of the cam follower (11) relatively moves within the cam groove (15) and the slider (9) arrives at the second position from the first position, contacts with a middle section of the cam follower (11) and allows the cam follower (11) to surmount the first wall (18a); and
a second wall (18b), which, at the time the slider (9) returns to the first position from the second position, contacts with the middle section of the cam follower (11) and
allows the cam follower (11) to surmount the second wall (18b), are provided in the vicinity of the cam groove (15) of the slider (9).

9. The card connector according to claim 3, wherein
the slider (9) is furnished with a shaft holding section (19) which slidably holds the shaft (12), wherein
a transverse cross-sectional V-shaped plate spring (25) which includes a mounting hole through which the shaft (12) is inserted, is installed between the shaft holding section (19) and the coil spring (13) in a state in which the shaft (12) is inserted into the mounting hole, and wherein
the plate spring (25) has larger elasticity than the coil spring (13), and a restraining force resulting from friction with respect to the shaft (12) when the plate spring (25) is open in a biasing direction is greater than a restraining force resulting from friction with respect to the shaft (12) when the plate spring (25) is closed in an opposite direction to the biasing direction.
